# EUROPEAN PATENT APPLICATION

(11) **EP 2 181 744 A1**
(43) Date of publication of application: **05.05.2010**
(21) Application number: 08167798.1
(22) Date of filing: 29.10.2008
(51) Int. Cl.: B01D 21/26, B01D 17/02, B04B 5/10, C10G 33/06, C10M 175/00

(54) **Method and arrangement for separating water and particular material from heavy fuel oil**

(71) Applicant: Citec Engineering Oy AB, 65100 Vaasa (FI)
(72) Inventor: Bergman, Ted, 21600, PARGAS (FI); Mäkelä, Kristian, 20520, ÅBO (FI); Nylund, Jonas, 20810, ÅBO (FI)
(74) Representative: Suominen, Kaisa Liisa

(57) **Abstract**

The invention relates to a method and an arrangement for separating particular material and/or water from heavy oil. An input flow of heavy oil comprising particular material and/or water is introduced to a first centrifugal separator, where heavy oil is separated from water and particles. Heavy oil is led out of the first centrifugal separator (6) as a primary output flow (10) and water (13) and/or particular material (11) is led out of the first centrifugal separator (6) as a secondary output flow(s). According to the invention the heavy oil comprising particular material and/or water is introduced to the first centrifugal separator at a density that is higher than density of the water at that temperature.

## Description

The invention relates to a method and arrangement for separating water and particular material from heavy fuel oil according to the preambles of the enclosed claims.

### PRIOR ART

Fuel costs form a major part of the operating costs of a diesel power plant as well as in diesel dependent industry, such as marine industry. The fuel costs can be reduced by using as heavy and cheap fuel oil fractions as possible. The quality of the heavy oil fractions is steadily reduced on the market due to improved refinery processes, which enable the larger proportion of the raw oil to be refined to higher quality products. At the same time, the quality of the heavier fractions is degraded. The limiting factor for the use of heavy oil is the quality requirements imposed on the fuel oils relating to the water and content of particular material.

In industry, heavy oil fractions are processed by using centrifugal separators for separating particles and water from fuel. In order the separation to take place the fuel oil should have lower density than the particles and water at the separation temperature. This means that density of the heavy oil should not exceed 1010 kg/m³ at 15°C, the density of the water being at that temperature about 3 kg/m³ higher. Light oil fractions could be added to the heavy fuel oil in order to lower its density and viscosity, which naturally would increase the costs of the fuel. Another solution is to increase the density of the water by suitable additives over the density of the heavy fuel oil. These procedures also add costs and are complicated.

### OBJECT OF THE INVENTION

An object of the present invention is to minimise or even totally eliminate the problems existing in the prior art.

One object of the present invention is to provide a method and arrangement that enables use of heavier fuel oil in power stations and marine industry than what is customary nowadays.

Another object of the present invention is to decrease the operating costs of power stations and marine industry by enabling the use of cheaper fuel than nowadays.

These objects are at least partially attained by the present invention, especially with the characteristics presented below in the characterising parts of the independent claims.

### SUMMARY OF THE INVENTION

Typical method according to the present invention for separating particular material and/or water from heavy oil comprises at least the following steps:
- introducing an input flow of heavy oil comprising particular material and/or water to a first centrifugal separator,
- separating heavy oil from water and particles,
- leading the heavy oil out of the first centrifugal separator as a primary output flow,
- leading water and/or particular material out of the first centrifugal separator as a secondary output flow(s),
- introducing the heavy oil comprising particular material and/or water to the first centrifugal separator at a density that is higher than density of the water at that temperature.

Typical arrangement according to the present invention for separating particular material and/or water from heavy oil, comprises
- a heavy fuel oil reservoir,
- a first centrifugal separator into which an input flow of heavy oil comprising particular material and/or water is introduced from the heavy oil reservoir,
- a primary outlet for leading the heavy oil out of the first centrifugal separator as a primary output flow,
- at least one secondary outlet for leading water and/or particular material out of the first centrifugal separator as a secondary output flow(s), whereby
the first centrifugal separator is in connection with a second centrifugal separator for leading the secondary output flow(s) from the first centrifugal separator to a second centrifugal separator.

### DETAILED DESCRIPTION OF THE INVENTION

Now it has been found out that the separation of the water and particular material from heavy oil can be performed when the density of the heavy oil is higher than the density of the water at the separation temperature. In other words, the separation process is conducted the other way round compared to known prior art processes. It has been realised that the addition of light oil fractions originating outside of the process is unnecessary. The process according to the invention can be conducted simply and effectively by employing known separators without extensive structural modifications by assembling them in a novel manner and using them in a new way. Thus the overall costs of the process can be significantly reduced as heavier and cheaper oil fractions can be used.

In this application the term "heavy fuel oil" means oil fraction, preferably a mineral oil fraction, that has a density of above 900 kg/m³ at 15°C. The terms "heavy fuel oil" and "heavy oil" are used concurrently in this application. The uncleaned heavy fuel oil comprises particular material and/or water as contaminants. The amount of water is typically around 0.05 - 0.6 volume-%. The amount of particular material is typically around 0.01 - 0.05 mass-%. Heavy oils that may be cleaned by using the method according to the present invention are e.g. fuel oils, diesel oils, hydraulic oils and lubricating oils. Typical viscosity of the heavy oil is from 30 to 3000 cSt (centistokes) at 50°C.

The viscosity of the heavy fuel oil that is fed to the first separator as an input flow has a suitable viscosity to ensure an effective separation. Temperature dependence of the viscosity of heavy oil is logarithmic, falling with the raising temperature. Thus the viscosity of heavy oil may be controlled by temperature.

The heavy fuel oil comprising particular material and water is introduced as an input flow to a first separator. The first separator is arranged to operate so that the clean heavy oil forms a primary output flow and flows out from the separator from the outlet that is reserved for the separated heavy phase. Water forms a secondary output flow and flows out from the separator from the outlet that is reserved for the separated light phase. In order to ensure that the primary output flow is practically water-free, the separation is arranged so that a relatively small amount of the oil is separated together with water to the first secondary output flow. The amount of oil in the secondary output flow depends mainly on the density difference between the oil and water, as well as constructional details of the separator. High density difference between the heavy fuel oil and water improves the separation of these two constituents and guarantees water-free primary output flow. In practice, the density of the salt water normally present in the heavy oil may be up to 1026 kg/m³ at 25°C. The higher the density of the heavy fuel that is to be separated, the better the separation result that is achieved.

Particular material is also separated from heavy fuel oil in the first separator and it forms a second secondary output flow from the first separator. Particular material is removed from the first separator through an outlet reserved for particular material. Normally particular material has a higher density at a separation temperature than the heavy fuel oil. The higher the density difference between the particular material and heavy oil, the better the separation result that is achieved. In practice, a relatively small amount of heavy oil is separated together with the particles, whereby the second secondary output flow comprises also heavy fuel oil. The first separator is preferably constructed in such a manner that no particular material is allowed to escape to the primary output flow.

From the first separator the primary output flow is led to a storage tank or directly to the engine, fuel burner or the like where it is used e.g. for production of heat or power.

The secondary output flows from the first separator comprising water, particular material and relatively small amounts heavy oil are preferably led to a second separator. The amount of water and particles in the input flow to the second separator is higher than in the input flow to the first separator. The secondary output flows may be led to the second separator via a storage tank, such as sludge tank, where the flows are combined and possibly mixed. According to another embodiment separate secondary outflows from the first separator may be combined to a single outflow and led directly to the second separator e.g. via a feed line. When the secondary output flows are led directly after mixing with lighter oil to the second separator the risk of solid particles settling in the sludge tank is eliminated.

Preferably the feed line to the first separator and/or to the second separator is kept pressurized, as the temperature of the flow is typically above 100°C. If the feed lines are unpressurized there is a risk that the water in the flows starts to boil, which may cause problems in the separation process.

According to one embodiment of the invention, the density of the heavy oil in the secondary output flow(s) from the first separator is adjusted, often reduced, to a lower density than the density of the water at the prevailing separation temperature before leading the output flow to the second separator as an input flow. The density of the input flow that is led to the second separator is preferably under 1010 kg/m³ at 15°C. The density of the heavy oil may be reduced by addition of density reducer, such as additive oil having a density, which is lighter than the density of the heavy oil. Typically the density of the additive oil is around 700 - 990 kg/m³ at 15°C. The additive oil that is used for lowering the density of the heavy oil is preferably completely, or almost completely miscible with the heavy oil, otherwise the obtained oil blend has a reduced stability. By keeping the amount of the additive oil low, the stability of the mixture is improved. Also the costs are reduced as only small amount of additive is needed for the cleaning and separation of heavy oil from particular material and/or water. The mixing of the heavy fuel and the density reducer may be performed in a mixing apparatus or mixing tank arranged between the first and second separator. The mixing is preferably performed gently so that the water in secondary output flows is not emulsified. In case the water is emulsified it is complicated to de-emulsify the result.

The second separator may operate in conventional manner. The clean heavy oil forms a primary output flow and flows out from the separator from the outlet that is reserved for the separated light phase. Water forms a secondary output flow and flows out from the separator from the outlet that is reserved for the separated heavy phase. Particular material is also separated from heavy fuel oil and forms a second secondary output flow that is removed through an outlet reserved for particular material.

Different types of separators may generally be employed in the present invention. In an embodiment it is possible to use any separator of gravitational type as the first separator. This means that it is contemplated that the first separator, instead of centrifugal separator, can be a separator based on gravitation, such as clarification tank or settling apparatus.

Preferably a centrifugal separator is employed as a first separator in which the separation takes place by centrifugal force. The input feed comprising uncleaned heavy fuel oil is led into the separator where the centrifugal force makes the heavy phase, i.e. heavy oil and solid particles, moving out towards the periphery of the separator, while the light phase, i.e. water flows inwards. The solids accumulate on the periphery of the separator and are removed periodically or continuously. The separated water flows towards the centre of the separator and up to the paring disc. Preferably the centrifugal separator is of self-cleaning disc stack type.

It is possible to use disc-stack nozzle centrifugal separators as a first and/or second separator. A disc stack centrifugal separator comprises a bowl that rotates on a vertical axis, with a stack of conical discs in the centre. The bowl is rotated at a high speed, whereby a controllable centrifugal force is created that presses the solid particles and heavy phase outwards towards the bowl wall, where they accumulate and may be discharged separately. Use of nozzle type centrifugal separator enables continuous ejection and separation of particular material, water and heavy fuel oil. Continuous ejection makes the pressurization of the following feed lines simple. These separators also have a minimal number of moving parts, which make their maintenance and automation easy. Rising channels may be preferably arranged to the disc-stack of the centrifugal separator in order to facilitate the separation of water from the heavy fuel oil.

According to another embodiment of the invention a self-opening bowl type centrifugal separator is used as a first and/or second centrifugal separator. A self-opening bowl type centrifugal separator has constant discharge of primary output flow comprising heavy oil and intermittent discharges of at least one secondary output flow comprising particular material and/or water. In the first separator particular material together with relatively small amount of heavy oil are discharged from the periphery of the bowl and water and cleaned heavy oil are discharged from central outlets. Discharge intervals are adjusted according to water and particle content of the heavy fuel oil.

The separation capacity, i.e. the size of the first and/or second separator may be between 500 - 100 000 l/h, preferably 1000 - 50 000 l/h. The capacity of the first and the second separator may be different from each other. For example the capacity of the first separator may be larger than the capacity of the second separator.

According to one embodiment of the invention the number of separators is dependent on the required separation capacity. It is possible to arrange a plurality of first separators parallelly and to connect them to one second separator. In that case the secondary output flows from the primary outlets of a number of first separators is led to an inlet of a second separator. It is also possible to have a plurality of first separators and a plurality of second separators. Typically the number of first separators is 2, 3, 4, 5, 6, and the number of parallel second separators is 2, 3, 4, 5 or 6. Typically there are as many first separators as second separators. If not all separators are required they may be by-passed or otherwise arranged in stand-by state.

According to one embodiment of the invention it is also possible to by-pass one or several of the first or second separators depending on the quality of the used fuel. This makes it possible to use fuel oil of variable density in one process. For example, when the heavy fuel oil from which the water and particular material are to be separated has a density that is lower than the density of water at the separation temperature, the first separator may be by-passed and the fuel led directly to the second separator, without any addition of density reducer, such as light additive oil, before the second separator. In case the heavy fuel oil to be cleaned has the same density as water at the separation temperature, it is possible to by-pass the first separator, add density reduced to the heavy oil flow and to lead it to the second separator.

According to an embodiment of the invention density and/or temperature are measured or controlled at least at one of the input and/or output flow(s) by using suitable measuring means, arranged before input of the second separator.

Density of the input flow before the first and/or second separator may be measured by using density meter or by measuring the conductivity of the flow(s). Conductivity measurement gives information on the amount of water in the flow, and it may be used indirectly to control the density of the heavy oil, which is fed to the first and/or second separator. In case the conductivity of the first output flow, i.e. cleaned heavy oil, from the first or second separator exceeds a certain limit, it is clear that the separation in the first or second separator is not satisfactory. This might be caused by too small density difference between the heavy oil and water in the input flow. The results from the conductivity measurement of the first output flow may be used to adjust the density of the input flow to the first or second separator. For implementation of the conductivity measurement a conductivity meter may be connected to or installed in the separator or a separate conductivity meter can be arranged to measure the conductivity of the output flows from first and/or second separator(s). The conductivity measurements may be conducted for primary or secondary output flows, or for both.

Density measurement before the first separator may be used to determine if the separation is taking place at the right temperature. If the density difference between the measured value and the practical water density value is not large enough, it is possible to heat the input flow before it is introduced to the first separator.

The density measurement of the secondary output flow from the first separator before the second separator may be done in order to ensure that the density of the heavy oil fraction in the output flow is low enough before the introduction to the second separator. If the measured density is higher than the density of the water, the density ratio is adjusted by lowering the density of the heavy oil or by raising the density of the water.

The density measurements do not need to be continuous measurements. Typically it is adequate if the measurement is performed regularly at predetermined intervals.

According to one embodiment of the invention the density of an input flow to the first and/or second separator may be adjusted by addition of density reducer, such as additive light oil, by addition of separation aid, by changing the temperature of the input flow or by addition of fresh water to the input flow. Before the first separator typically the density of the water phase is adjusted by addition of fresh water, and before the second separator typically the density of the heavy oil is adjusted by addition of density reducer.

The density of an input flow to the first and/or second separator may be adjusted by changing the temperature of the input flow. According to one embodiment of the invention the heavy fuel oil that forms the input flow to the first separator is heated to a predetermined temperature before its introduction into the first separator. Heating is performed in order to control the density and/or viscosity of the oil fraction in the input flow and to ensure that the density of the heavy oil is higher than the density of water. Typically the input flow is heated to a temperature in the range 50 - 200 °C, preferably 98 - 150 °C, more preferably 98 - 140 °C, sometimes the range between 110 - 140 °C being the most preferable.

The input flow to the second separator is preferably cooled before its introduction to the separator. It is possible to arrange a separate cooling apparatus before the second separator and to cool the output flows from the first separator before they are led to the second separator. In this manner it is possible to ensure that the density of the water is higher than the density of the heavy fuel oil when they are led into the second separator. The cooling may be performed under pressure. The cooling of the output flows from the first separator may be done also in the mixing apparatus that is arranged between the first and second separator. The temperature of the total flow may be reduced if a colder flow of additive oil is added to and mixed with the warm output flows. At the same time also the addition of additive oil reduces the density of the oil.

According to one embodiment of the invention the mixers employed in the different mixing processes of the invention may be, for example, sulzer type mixers having baffles to ensure good mixing of the different flows.

According to one preferred embodiment the primary outlets from the first and/or the second separator may be pressurized. The feed lines to the first separator(s) may be pressurized as well. The used separation temperature is relevant for the pressure requirements of the different inflows and outflows to and from the first and second separator.

According to one preferred embodiment the present invention is used in diesel power plants, marine industry and other applications using heavy fuel oil. The present invention has various advantages over the known solutions. It may lower the fuel costs, as heavier and cheaper oil fractions may be used than earlier. Costs associated with water usage and purification may be lowered as less water is used and there is less water that must be cleaned and purified. This will be beneficial from the environmental point of view.

According to a separate second aspect of the present invention it is possible to use fuel oil for cleaning of the discs of the centrifugal separators or to use fuel oil for operating the separator. The fuel oil that is used for cleaning the separator or for controlling its operation is termed as waste sludge when it is removed from the process. The waste sludge typically comprises an impure oil fraction and around 50 volume-% water. The amount of oil in waste sludge is so high that it is possible to use it as a fuel, especially if it is burned with supporting fuel, such as bark or the like. It is possible to use the waste sludge as a fuel without supporting fuel when its water content is under 50 volume-%. In that case it has a caloric value around 25 MJ/kg that is comparable to coal. Typically the amount of oil fraction in the waste sludge is around 60 volume-%, typically from 55 to 65 volume-%.

Preferably the waste sludge is emulsified in an emulsifier before storage in a storage tank and before its use as a fuel. Emulsifying the waste sludge inhibits the phase separation of the oil and water fractions during the storage. Waste sludge which is obtained as a by-product, can be effectively used as a fuel, and even sold. It may be used as fuel in power plants, in marine industry, in cement industry, or pulp and paper industry.

The invention is described in more detail with the aid of the following figure, in which
Figure 1 shows schematically one embodiment of the present invention, and
Figure 2 shows an example of a process according to the second aspect of the invention, in which process the invention according to Fig. 1 may be used, as a schematic flow diagram.

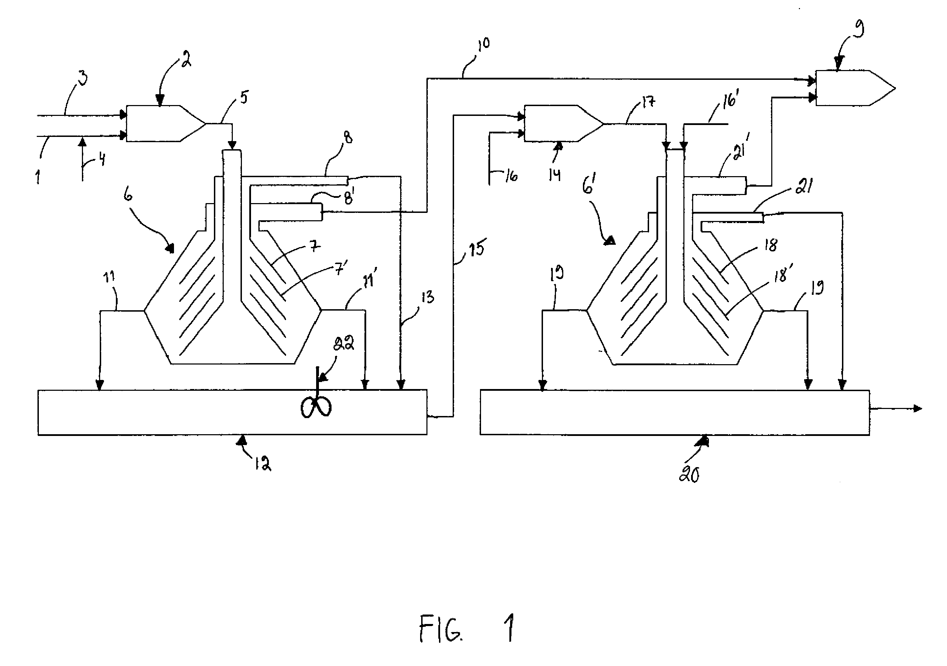

In Figure 1 is shown schematically one embodiment of the present invention. Uncleaned heavy fuel oil comprising water and particular material is fed through pipeline 1 to a mixer 2. A small flow of fresh water may also be added to the mixer 2 through a pipeline 3. Addition of water to the mixer 2 is optional and its purpose is to decrease the salinity of the water and, at the same time, lower the density of the water. If the density difference between the fuel oil and water is adequate, addition of water is not necessary. Through pipeline 4 de-emulsifying agent may be added to the flow of uncleaned heavy oil in order to break the water-oil emulsion in the fuel oil.

From the mixer 2 the uncleaned heavy oil is led through pipeline 5 to the inlet of the first centrifugal separator 6. A heating apparatus may be arranged before the inlet of the first centrifugal separator 6 in order to heat the inlet flow to a suitable level. The first separator 6 comprises a stack of discs 7, 7'. The uncleaned heavy oil is brought to a rotating movement, whereby the heavy particles together with the heaviest oil fractions are separated to the periphery of the separator 6, from where they are discharged through particle-phase openings as a particle-rich secondary flows 11, 11'. Water which is the lightest element in the input flow is separated through a light-phase outlet 8 as a secondary output flow. The particle-and water-free heavy fuel oil is taken out of the separator 6 through a heavy-phase outlet 8' as a primary output flow. The primary output flow is the largest of the output flows, measured in volume. In order to guarantee the quality of the separated heavy oil, small amounts of heavy oil is also separated together with water and with particular material, i.e. the secondary flows comprise an amount of heavy fuel oil. The cleaned heavy fuel oil is led from the outlet 8' to an optional mixer 9 by using pipeline 10.

The particle-rich secondary outflows 11, 11' from the first separator 6 are led to a storage tank 12. Also the water-rich secondary outflow from the light-phase outlet 8 of the first separator 6 is led through a pipeline 13 to the storage tank 12. A mixing agitator 22 is installed in connection with the tank 12 to prevent sedimentation of the particles and possible phase-separation of oil and water. It is also possible to lead the secondary flows further from the first separator 6 by using a straight pipeline to the second separator.

The combined secondary flows are led from the storage tank 12 to a mixing apparatus 14 through a pipeline 15. In the mixing apparatus 14 the density of the heavy fuel oil is lowered below the density of the water. Density reducing agent is added to the mixing apparatus through suitable inlet by pipeline 16. Light fuel oil may be used as a density reducing agent. Preferably a lighter heavy fuel oil is used as a density reducing agent.

From the mixing apparatus 14 the flow in led through a pipeline 17 to the inlet of the second centrifugal separator 6'. Also water may be added to the second separator 6' through pipeline 16', as to function emollient and/or displacement agent. The second separator 6' comprises a stack of discs 18, 18'. The input flow is brought to a rotating movement, whereby the heavy particles together with water are separated to the periphery of the second separator 6', the density of the water being greater than the density of the heavy oil in the second separator 6'. Water and particles are discharged through particle-phase openings as particle-rich secondary flows 19, 19' to a waste sludge tank 20. Water is also separated through a heavy-phase outlet 21 as a secondary output flow, and led to the sludge tank 20. The particle- and water-free heavy fuel oil is taken out of the separator 6' through a light-phase outlet 21' as a primary output flow. The cleaned heavy fuel oil is led from the outlet 21' to an optional mixer 9, where it is mixed with the cleaned heavy oil coming from the first separator 6. This cleaned heavy oil is then led further in process. The waste sludge from sludge tank 20 can be burned, treated or sold as a fuel.

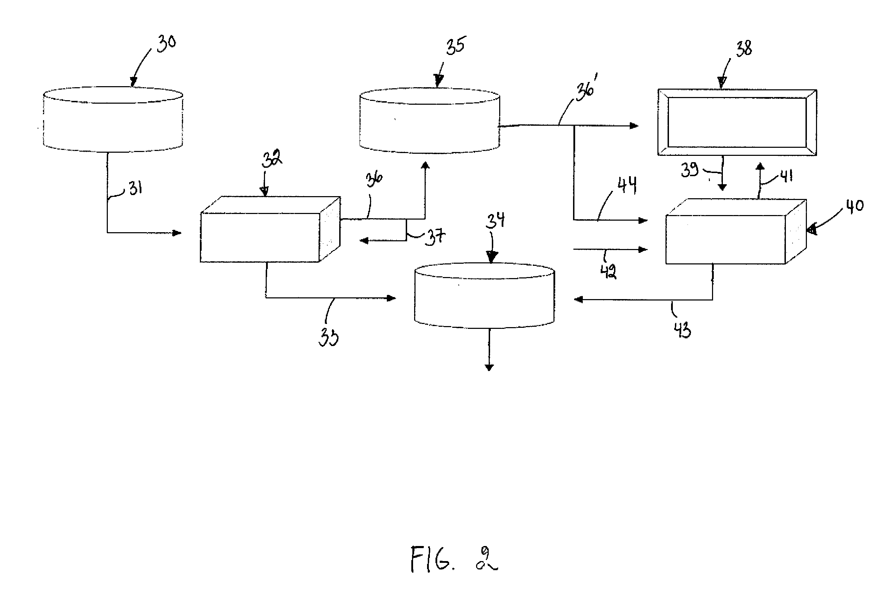

Figure 2 example of a process according to the second aspect of the invention. Uncleaned heavy oil is led from a storage tank 30 through a pipeline 31 to a separation unit 32. The separation unit may comprise the embodiment presented in Figure 1. From the separation unit 32 the waste sludge is conducted via pipeline 33 to the sludge storage tank 34. The cleaned heavy fuel oil is conducted from the separation unit 32 to a supply tank 35 through a pipeline 36. A part of the cleaned heavy fuel may be conducted back from the supply tank 35 to the separation unit 32 through a pipeline 37, for example for cleaning the disc-stack of the separator or for operating the separator. From the supply tank 35 the cleaned heavy oil is fed to motor means 38 through pipeline 36'.

In Figure 2 can also be seen separation cycle for cleaning the lubrication oil of the motor means 38. Lubrication oil from the motor means 38 is led through a pipeline 39 to a second separation unit 40, usually comprising a conventional centrifugal separator. The cleaned lubrication oil is led back to the motor means 38 through pipeline 41, and the waste sludge is led to the sludge storage tank 34 through pipeline 43. Water may be added to the second separation unit 40 through pipeline 42, to function as emollient and/or displacement agent. A part of the cleaned heavy oil from supply tank 35 may also be used in the second separation unit 40 through pipeline 44 to operate the separator. The waste sludge from sludge storage tank 34 can be burned or sold as a fuel.

It will be appreciated that the essence of the present invention can be incorporated in the form of a variety of embodiments, only a few of which are disclosed herein. It will be apparent for the specialist in the field that other embodiments exist and do not depart from the spirit of the invention. Thus, the described embodiments are illustrative and should not be construed as restrictive.

## Claims

1. Method for separating particular material and/or water from heavy oil by
- introducing an input flow of heavy oil comprising particular material and/or water to a first centrifugal separator,
- separating heavy oil from water and particles,
- leading the heavy oil out of the first centrifugal separator as a primary output flow,
- leading water and/or particular material out of the first centrifugal separator as a secondary output flow(s),
**characterised in**
- introducing the heavy oil comprising particular material and/or water to the first centrifugal separator at a density that is higher than density of the water at that temperature.

2. Method according to claim 1, **characterised in** leading the secondary output flow(s) comprising water and/or particular material together with small amounts of heavy oil to a second centrifugal separator for separation of water, particular material and heavy oil from each other.

3. Method according to claim 2, **characterised in** adjusting the density of the heavy oil in the secondary output flow(s) from the first separator to a lower density than the density of the water at the prevailing temperature before leading the output flow to the second separator.

4. Method according to any of claims 1 to 3, **characterised in** leading the primary output flow from a plurality of parallel first separators to the inlet of the second separator, the density of the heavy oil fraction in the first output flow being higher than the density of the water at the prevailing temperature.

5. Method according to any preceding claim 1 to 4, **characterised in** measuring density and/or temperature at least one of the input and/or output flows.

6. Method according to any preceding claim 1 to 5, **characterised in** heating the input flow before its introduction to the first centrifugal separator.

7. Method according to any preceding claim 1 to 6, **characterised in** keeping the feed line(s) connecting the secondary outlets of the first separator to the inlet of the second separator pressurized.

8. An arrangement for separating particular material and/or water from heavy oil, the arrangement comprising
- a heavy fuel oil reservoir,
- a first centrifugal separator into which an input flow of heavy oil comprising particular material and/or water is introduced from the heavy oil reservoir,
- a primary outlet for leading the heavy oil out of the first centrifugal separator as a primary output flow,
- at least one secondary outlet for leading water and/or particular material out of the first centrifugal separator as a secondary output flow(s),
**characterised in that**
the first centrifugal separator is in connection with a second centrifugal separator for leading the secondary output flow(s) from the first centrifugal separator to a second centrifugal separator.

9. Arrangement according to claim 8, **characterised in that** the arrangement comprises means for adjusting the density of the secondary output flow(s), arranged before input of the second separator.

10. Arrangement according to claim 8 or 9, **characterised in that** the arrangement comprises a plurality of first parallel separators having primary outlets arranged in connection with an inlet of the second separator via optional mixers.

11. Arrangement according to any preceding claim 8 to 10, **characterised in that** the arrangement comprises measuring means for measuring density and/or temperature at least one of the input and/or output flows.

12. Arrangement according to any preceding claim 8 to 11, **characterised in that** the arrangement comprises heating means for heating the input flow before its introduction to the inlet of the first centrifugal separator.

13. Arrangement according to any preceding claim 8 to 12, **characterised in that** the feed line(s) connecting the secondary outlets of the first separator to the inlet of the second separator is(are) kept pressurized.

14. Arrangement according to any preceding claim 8 to 13, **characterised in that** the first and/or second separator is a disc-stack centrifuge.

15. Use of the method according to any of claims 1 to 7 in a plant using heavy fuel oil, such as power plants, marine industry or cement industry.
